# EUROPEAN PATENT SPECIFICATION

(11) **EP 2 637 514 B1**
(45) Date of publication and mention of the grant of the patent: **29.10.2014**
(21) Application number: 11779726.6
(22) Date of filing: 11.11.2011
(51) Int. Cl.: A23L 1/0532, A23L 1/054, A23L 1/39, A23L 1/40

(54) **GEL COMPOSITION**
GELZUSAMMENSETZUNG
COMPOSITION DE GEL

(30) Priority: 12.11.2010 EP 10191113
(43) Date of publication of application: 18.09.2013
(73) Proprietor: Nestec S.A., 1800 Vevey (CH)
(72) Inventor: LAGARRIGUE, Sophie, 78462 Konstanz (DE); GRASSI HEITZ, Sabrina, CH-8304 Wallisellen (CH); TOLEA, Andreea, 78467 Konstanz (DE)
(74) Representative: Mollet, Beat Max
(86) International application number: PCT/EP2011/069975
(87) International publication number: WO 2012/062919

(56) References cited:
- EP-A1- 0 768 042
- EP-A1- 1 031 345
- JP-A- 2002 306 114
- JP-A- 2006 230 330
- US-A- 5 385 747
- US-B1- 6 544 573

## Description

### TECHNICAL FIELD

This invention relates to a gel composition for preparing a food product and to a process for preparing a food product. In particular, the invention relates to a heat-reversible gel composition comprising both iota-carrageenan and xanthan as gelling agents for preparing savoury food products.

### BACKGROUND

Concentrated food products, such as bouillon or stock cubes, have been known for many years. In the search for alternative product types having different characteristics and advantages over traditional food concentrates, food compositions concentrated in gel form have been developed. A number of such products are now known. They are typically based on the presence of a gelling agent or a combination of two or more gelling agents.

Those products based on a single hydrocolloid gelling agent usually do not exhibit all the characteristics needed for an easy to use food concentrate product. Thus, two-component hydrocolloid based gel systems have been developed. These each have their characteristics which may make them suitable for some food applications, but not others.

Gelatin is commonly used in the food industry to produce gelled savoury products. Vegetarian alternatives to gelatin have been developed over many years, with carrageenans being one of the most used replacers for gelatin especially in sweet products such as jellies. In savoury products, carrageenans are mainly used as thickeners or stabilizers, for example in salad dressings, as well as in meat based products in which they can also be used for their gelling properties. In those applications though, heat reversibility is not a desired feature. However, there is a drawback to extending the use of carrageenans to some gelled food products. Carrageenans are generally used in food products that have a low salt concentration, typically 1-3 %. One example is US 6,544,573 which describes a salad dressing having a salt concentration of 2 or 3.5 %. For products having a high salt content, gelling temperatures and melting temperatures dramatically increase making the gels difficult to melt when reheated or dissolved in hot water. Carrageenans are also prone to syneresis when a high amount of salt is added. For these reasons, carrageenans have not previously been considered as gelling agents for high salt content food products.

Attempts have been previously made to find improved gelling ingredients that are suitable for concentrated food products. Combinations of two hydrocolloid polysaccharides have been found to exhibit suitable gelling properties. For example, WO 2007/068484, WO 2008/151850, WO 2008/151851 and WO 2008/151852 describe a combination of xanthan and various galactomannans (locust bean gum, tara gum, guar gum or cassia gum) as a gelling agent. One problem with these combinations is that when increasing the salt content of the food product, the dosage of the gelling agent needs to be increased since the gel loses strength as the salt content is increased. There is a need for a gelling agent composition which is stable or has increased gel strength when salt content is increased enabling the production of a more consistent product over a wide range of salt concentrations. Another problem is that these combinations, when used to make a soup or sauce, are still able to form a gel very quickly during cooling. This can lead to an undesirable texture for consumption of the product when the dish is cooling. There is therefore a need for a gelling agent composition which does not gel during the normal food consumption times.

WO 2008/151852, describing the use of xanthan and cassia gum, has the drawback that cassia gum is not available in the quantities required for industrial production in food grade quality, or is very expensive. Furthermore, the regulatory status of cassia gum is still not clear in many countries, making its use in industrial products very difficult.

A combination of gelatin and starch is described in WO 2007/068402 and WO 2007/068483. The main problem with this combination is that a very high dosage of gelling agents is needed (greater than 10 %). Also, gelatin is not popular as a food ingredient with those preferring a vegetarian diet.

JP 2001-258517 describes the use of agar, xanthan and locust bean gum. The possible use of carrageenan instead of xanthan and locust bean gum is also mentioned. But this gelling composition suffers from the problem that the composition cannot be melted quickly when reheated and added to hot water. An easy melting gel is an important characteristic desirable for concentrated food products.

It has now been found that a combination of iota-carrageenan and xanthan has certain desirable and surprising characteristics.

EP 1 031 345 the preparation of a calcium polystyrene sulfonate-containing gel comprising carrageenan, xanthan gum and locust bean, but does not teach the use of iota-carrageenan.

An object of the present invention is therefore to provide a gel composition that at least goes part way to overcoming one or more of the above disadvantages of existing gel compositions or at least provides a useful alternative.

### SUMMARY OF THE INVENTION

In a first aspect of the invention there is provided a composition in the form of a gel for preparing a food product, the composition comprising:
a) water in the amount of 30 to 70 % (by weight of the total composition),
b) flavourings in the amount of 1 to 40 % (by weight of the total composition),
c) salt in the amount of 10 to 25 % (by weight of the total composition), and
d) gelling agents in the amount of 0.2 to 5 % (by weight of the total composition),
wherein the gelling agents comprise at least iota-carrageenan and xanthan.

The amount of gelling agents in the composition may preferably be 0.6 to 2 %. The ratio of iota-carrageenan and xanthan is preferably in the range of 80:20 to 30:70, but more preferably in the range 50:50 to 60:40. The gelling agents may further comprise starch or another carrageenan type.

The composition may also comprise fat, preferably in the amount of 1 to 10 %. Maltodextrin or glucose syrup in the amount of up to 40 % may also be included. The amount of water is preferably in the range 40 to 60 %, more preferably 45 to 60 %. Flavourings are included in the composition typically in the amount of 1 to 30 %, preferably 5 to 15 %.

In preferred embodiments of the invention, the composition is adapted to be heat reversible, meaning that it melts when reheated to a temperature above 75 °C and dissolves when added to boiling water in less than 2 minutes.

The composition of the invention may be used to prepare any suitable food product, especially sauces, soups, stocks, bouillons or gravies.

In a second aspect of the invention there is provided a process for preparing a composition according to the invention comprising the steps:
a) mixing gelling agents including at least iota-carrageenan and xanthan, in water,
b) heating to a temperature of at least 70 °C, preferably at least 80 °C,
c) adding salt and flavourings, and mixing,
d) heating at a temperature of at least 75 °C, preferably at least 80 °C, to pasteurize,
e) filling into containers, and
f) cooling to room temperature to form the gel.

The process may further comprise making a premix of the gelling agents with maltodextrin or glucose syrup and/or starch. The process may also comprise adding fat after mixing of the gelling agents.

In another aspect of the invention there is provided a use of the composition of the invention for preparing a food product, such as a sauce, soup, stock, soup base, bouillon or gravy.

### DETAILED DESCRIPTION

There is a need for a composition for preparing a food product having the texture of a gel and which is able to withstand high salt contents. The gel-forming composition should be able to set and melt reversibly. The melting temperature should be in a range allowing the composition to melt easily during a standard heating step or to allow dilution of the gel composition in hot water. There is further a need for a gel composition for preparing a food product that is stable during transportation and storage, and shows a low syneresis during storage typically for a few weeks or even up to several months.

It has now been found that these benefits may be achieved at least in part by a gel composition for preparing a food product comprising: 30 to 70 % water, 10 to 25 % salt, and 0.2 to 5 % gelling agents, wherein the gelling agents comprise at least iota-carrageenan and xanthan. In addition, the composition comprises 1 to 40 % of other ingredients typically encountered in savoury products such as flavourings (for example, flavouring agents, taste enhancing ingredients, herbs, spices, vegetables, meat and fish components (in liquid or powder form), lipids, and carbohydrates or mixtures thereof. All percentages are based on weight of the total composition.

The term "gel", in the context of this invention, means a solid or semi-solid matrix formed by interaction with one or more polysaccharides and water, which is free standing over a time scale of at least a few minutes and which deforms partially in an elastic way when submitted to a deformation force.

The term "rupture strength" is used in reference to gel strength and relates to the deformation force needed to break the gel. The rupture strength of a gel should be at least 20 g, but preferably greater than 35 g, as measured using a Texture Analyser.

The term "heat reversible" indicates a gelling agent composition that is liquid at elevated temperatures, forms a gel during cooling to room temperature and melts again when reheated.

"Salt" refers to any suitable alkali metal salt or mixture thereof. The salt used in the composition of this invention is typically, but not limited to, sodium chloride. For example, potassium chloride may be used or any low-sodium product having a taste impression of sodium chloride may be used, as long as the taste in the end formulation is acceptable.

The term "carrageenan" refers to a family of linear sulfated polysaccharides which are usually extracted from red seaweeds. All carrageenans are high molecular weight polysaccharides made up of repeating galactose units and 3,6 anhydrogalactose, both sulfated and non-sulfated. The units are joined by alternating alpha 1-3 and beta 1-4 glycosidic linkages. Various types of carrageenans exist. Their structures differ in 3,6 anhydrogalactose and ester sulphate content. The main types are kappa, lambda and iota.

Iota-carrageenan forms gels in the presence of cations, and therefore its behaviour is strongly dependent on salt content. Gelling temperature increases when salt concentration increases. Carrageenan gels are usually heat reversible, showing a small hysteresis between the gelling and melting temperature. When salt content increases, gelling and melting temperatures can be as high as 90-95 °C making it difficult to dissolve easily in hot water. Iota-carrageenan also shows syneresis in the presence of salt.

As used in the context of this invention, "iota-carrageenan" means any carrageenan or mix of carrageenans having a predominance of iota-carrageenan structural units.

"Xanthan" is a hetero-polysaccharide of high molecular weight commonly used as a food thickening agent (for example, in salad dressings) and as a stabiliser (for example, in cosmetic products). Its main chain is constituted of glucose units and its side chain is a trisaccharide consisting of alpha-D-mannose which contains an acetyl group, beta-D-glucuronic acid, and a terminal beta-D-mannose unit linked with a pyruvate group. Xanthan shows very high compatibility with salts, for example up to 25 %, and provides high elasticity.

The term "flavourings", as used in this specification, includes flavouring agents, taste enhancing ingredients, herbs, spices, vegetables, fruits, meat, fish, crustaceans or particulates thereof.

The composition may comprise further ingredients selected from carbohydrates, lipids, or mixtures thereof. The lipids may be provided by oils, creamer, vegetable or animal fats, cream and any traditional ingredients used in the manufacture of savoury food compositions. Carbohydrates may be provided by sugars, starches, flours, maltodextrins, glucose syrups etc.

As used in this specification, the words "comprises", "comprising", and similar words, are not to be interpreted in an exclusive or exhaustive sense. In other words, they are intended to mean "including, but not limited to".

Further, any reference in this specification to prior art documents is not intended to be an admission that they are widely known or form part of the common general knowledge in the field.

The inventors of the present invention have surprisingly found that combining xanthan with iota-carrageenan reduces the dissolution time of the gel when added to hot water and enables the gel to melt when reheated to temperatures above 75 °C. Further, combining xanthan with iota-carrageenan enables modulation of the texture of a pure carrageenan gel (providing increased elasticity) and also reduces the syneresis normally observed with carrageenan gels.

The concentration range of the gelling agent in the gel composition of the invention is 0.2 to 5 %, preferably 0.6 to 2 % (based on the total weight of the composition).

The gelling agents may be only iota-carrageenan and xanthan, or may comprise iota-carrageenan, xanthan and other agents. In the case where only iota-carrageenan and xanthan are present, the ratio of iota-carrageenan to xanthan is preferably in the range of 80:20 to 30:70, more preferably 50:50 to 60:40, but may also be any other suitable ratio including, for example, 20:80, 40:60 or 80:20.

In addition to xanthan and iota-carrageenan, other carrageenan types may be added, especially kappa and lambda carrageenans.

The amount of water in the gel composition is in the range 30 % to 70 %, preferably 40 % to 60 %, more preferably 45 % to 60 %.

The amount of flavourings in the gel composition is in the range 1 to 40 %, preferably 5 to 15 %.

The composition according to the invention may further comprise fat in an amount of 1 to 10 %, such as, for example, emulsified or dispersed oil and/or fat. Further, the composition can comprise up to 40 % of maltodextrins and/or glucose syrup.

The relationship between salt and water is also important for the final texture of the gel product. The same rupture strength of a gel which contains, for example, 48 % water and 16 % salt can be obtained even if the water content is increased to 60 % and the salt content elevated to 20 % (without increasing the dosage of gelling agents). Therefore, even though the water content is increased significantly, the same rupture strength can be obtained by maintaining the same salt:water ratio. In addition, the same gel strength can be obtained when the dosage of gelling agents is reduced provided that only the salt level is increased and all other parameters, including water content, are kept constant.

While the composition of the invention may comprise water, salt and gelling agents in amounts falling within broad ranges (30 to 70 % for water, 10 to 25 % for salt, 0.2 to 5 % for gelling agents), gels having the preferred characteristics of gel strength, not too rapid gel formation, and ready dissolvability in hot water, are more likely to be (although not limited to) those having compositions such as:
40 to 45 % water, 12 to 25 % salt and 0.4 to 2 % gelling agents,
45 to 50 % water, 15 to 25 % salt and 0.4 to 2 % gelling agents,
50 to 55 % water, 17 to 25 % salt and 0.6 to 3 % gelling agents,
55 to 60 % water, 19 to 25 % salt and 0.6 to 3 % gelling agents.

The composition may also include particles or pieces of other ingredients such as vegetables, herbs, and meat.

The invention further relates to a process for preparing the gel composition of the invention.

The process comprises the steps of heating water, adding the ingredients to the water and applying at least one additional heating step to the mixture during the process of adding the ingredients.

In particular, the process preferably comprises the steps of heating water to 50 °C and making a premix of the hydrocolloids with glucose syrup or maltodextrins. The premix containing the hydrocolloids is added to water under mixing and heated at a temperature of around 80 °C (at least 75 °C) to properly hydrate the gums. Additional dry ingredients premixed prior to addition, including salt, flavourings and the like, are then added. Finally, the fat component is added and the complete composition is heated and pasteurized. The composition may then be filled into suitable containers, and left to cool at room temperature. The containers and consequently the cooled composition can have any possible shape, preferably the shape of a cube, pellet, sphere, egg-shape or the like.

The resulting product is a gel composition being stable at room temperature and melting when reheated to temperatures above 75 °C and dissolving when added to boiling water in less than 2 minutes, with or without an additional heating step. This dissolution rate is faster than other carrageenan based gel compositions.

The invention further relates to the use of a gel composition for preparing a food product, such as a soup, sauce, bouillon, stock, soup base or gravy, by melting or diluting the composition in hot or boiling water. Any suitable amount of gel composition can be used, although typically the amount used would be 25-50 g/L of water, or 25-50 g/kg of, for example, rice or vegetables, if being used directly with solid foods rather than added to water.

The product of the invention has several advantages over known gel compositions. One advantage is that the gelling process during and after cooling is slow. Typically it takes several hours before the gel is properly formed, for example 12-48 hours or even longer. In contrast, many known gel compositions form a gel as soon as the temperature is below 60-50 °C, which can lead to an undesired texture during consumption of the product. If the time between the food product preparation using the gel composition and consumption is too long, the soup or sauce may develop an undesirable gel texture again. The gel composition of the invention enables a non-gelled texture to be maintained for product consumption. Further, slow gelling enables the gel composition to be more easily processed, avoiding fast gelling in processing equipment.

Another advantage is that the gel strength is stable or even increases when salt content increases which enables a very consistent product to be produced even if some variations in the process are encountered (for example, water evaporation during the heating step).

### EXAMPLES

The invention is further described with reference to the following examples. It will be appreciated that the invention as claimed is not intended to be limited in any way by these examples.

### Example 1: process

The general procedure for preparing gel compositions of the above examples is as follows:
- add water into a mixing vessel
- add gelling agents (preferably premixed with maltodextrin or glucose syrup)
- mix until a homogeneous composition is obtained and heat to a temperature of 80 °C
- add all remaining ingredients into the vessel
- mix and homogenize until no lumps are visible
- heat at a temperature of 80 °C and pasteurize
- fill a suitable container and close
- allow to cool to room temperature

### Example 2: syneresis and rupture strength

Syneresis is measured as the amount of separated water divided by the amount of separated water + gel weight.

Rupture strength was measured using a Texture Analyser TAXT2 (Microstable systems) according to the following conditions:
- load cell: 5 kg.
- Penetration test using a cylindrical probe of 1.27 cm diameter.
- The sample was loaded just after heating into a container of 50 mm diameter, until reaching a height of 55 mm. The sample was allowed to cool and gel at ambient temperature. Before measurement, the sample is placed in a water-bath at 20 °C for temperature equilibration.
- Test conditions: pre-test speed: 1 mm/s, test speed: 0.5 mm/s, post speed: 10 mm/s. Measurement was stopped at 25 mm penetration depth.
- The rupture strength is recorded at the peak of the curve force versus penetration depth.

### Example 3: iota-carrageenan and xanthan (50:50)

| **Ingredient** | **Amount [%]** |
|---|---|
| Water | 51 |
| Salt | 21 |
| Glucose syrup | 15.2 |
| Chicken fat | 5.6 |
| Iota-carrageenan | 0.45 |
| Xanthan | 0.45 |
| Other ingredients | up to 100 |

The resulting product was a gel having a rupture strength of 60 g after one day, which dissolved when added to hot water in approximately 75 sec, and showed less than 5 % syneresis after 2 months. By comparison, the same gel produced with 0.9 % iota-carrageenan and no xanthan was found to have a rupture strength of 220 g after one day, a melting point of 95-100°C, a dissolution time in boiling water of around 2 minutes, and a syneresis of 7.5 % only after 2 days.

### Example 4: iota-carrageenan and xanthan (50:50)

| **Ingredient** | **Amount [%]** |
|---|---|
| Water | 60 |
| Salt | 20 |
| Glucose syrup | 0 |
| Sunflower oil | 0.7 |
| Iota-carrageenan | 0.6 |
| Xanthan | 0.6 |
| Other ingredients | up to 100 |

A comparison with Example 3 shows that when the water content of the composition is increased, a gel with the desired properties is obtained by increasing the concentration of gelling agents.

### Example 5: iota-carrageenan, xanthan (33:66) and starch

| **Ingredient** | **Amount [%]** |
|---|---|
| Water | 51 |
| Salt | 25 |
| Glucose syrup | 10 |
| Oil | 5.6 |
| Iota-carrageenan | 0.2 |
| Xanthan | 0.4 |
| Starch | 3 |
| Other ingredients | up to 100 |

This example shows that a gel can be formed when some carrageenan is replaced with starch.

### Example 6: iota-carrageenan, xanthan (50:50)and MSG

| **Ingredient** | **Amount [%]** |
|---|---|
| Water | 53 |
| Salt | 16 |
| MSG | 7.6 |
| I+G | 0.2 |
| Sugar | 4 |
| oil | 7 |
| Iota-carrageenan | 0.6 |
| Xanthan | 0.4 |
| Starch | 0.4 |
| Other ingredients | up to 100 |

This example shows that it is possible to form a gel when the composition contains other sodium contributing ingredients (e.g. MSG) in addition to salt.

### Example 7: iota-carrageenan, xanthan (50:50)and pieces/herbs

| **Ingredient** | **Amount [%]** |
|---|---|
| Water | 44 |
| Salt | 12 |
| Glucose syrup | 18 |
| Oil | 4 |
| Iota-carrageenan | 0.7 |
| Xanthan | 0.7 |
| Herbs and Pieces | 1 |
| Other ingredients | up to 100 |

This examples shows that a gel can still be formed when herbs/pieces are present in the composition.

### Example 8: iota-carrageenan, xanthan (80:20)

| **Ingredient** | **Amount [%]** |
|---|---|
| Water | 42 |
| Salt | 18.5 |
| Glucose syrup | 16.3 |
| Chicken fat | 4.1 |
| Iota-carrageenan | 1.2 |
| Xanthan | 0.3 |
| Other ingredients | up to 100 |

The gel formed in this example had a rupture strength of 180 g one day after preparation.

### Example 9: Comparison of gel formation times

| | **Xanthan/LBG** | **Carr/Xanthan** |
|---|---|---|
| **Ingredient** | **Amount [%]** | |
| Water | 51 | 51 |
| Salt | 17 | 17 |
| Glucose syrup | 15 | 15 |
| Chicken fat | 5.6 | 5.6 |
| Iota-carrageenan | 0 | 0.28 |
| Xanthan | 0.28 | 0.12 |
| LBG | 0.12 | 0 |
| Other ingredients | up to 100 | up to 100 |
| | | |
| **Gel formation time (at ambient temperature) [h]** | 0.5 | 24 |

This example compares the gel formation times of a composition containing xanthan and locust bean gum as the gelling agents and a composition containing iota-carrageenan and xanthan as the gelling agents. The composition containing xanthan and locust bean gum formed a gel-like texture after only about 30 min on cooling to ambient temperature. In contrast, the composition containing xanthan and carrageenan remained as a flowable paste for longer at the same conditions. A gel-like texture was not achieved until after about 24 h.

### Example 10: influence of salt on gel strength

| | **Recipe 1** | **Recipe 2** |
|---|---|---|
| **Ingredient** | **Amount [%]** | |
| Water | 42 | 42 |
| Salt | 22 | 18 |
| Glucose syrup | 14 | 15 |
| Chicken fat | 3.6 | 3.6 |
| Iota-carrageenan | 1.0 | 1.2 |
| Xanthan | 0.25 | 0.3 |
| Other ingredients | up to 100 | up to 100 |
| | | |
| **Rupture Strength [g]** | 185 | 183 |

The rupture strength after one day for each of the two recipes shows that if the salt content is increased and the content of water and other ingredients is kept constant, the same gel strength can be obtained for an iota-carrageenan/xanthan combination and even if the content of gelling agents is reduced slightly.

It is to be appreciated that although the invention has been described with reference to specific embodiments, variations and modifications may be made without departing from the scope of the invention as defined in the claims.

## Claims

1. A composition in the form of a gel for preparing a food product, the composition comprising:
a) water in the amount of 30 to 70 % (by weight of the total composition),
b) flavourings in the amount of 1 to 40 % (by weight of the total composition),
c) salt in the amount of 10 to 25 % (by weight of the total composition), and
d) gelling agents in the amount of 0.2 to 5 % (by weight of the total composition),
wherein the gelling agents comprise at least iota-carrageenan and xanthan.

2. A composition as claimed in claim 1, wherein the amount of gelling agents is 0.6 to 2 % (by weight of the total composition).

3. A composition as claimed in claim 1 or claim 2, wherein the ratio of iota-carrageenan and xanthan is in the range of 80:20 to 30:70, preferably in the range 50:50 to 60:40.

4. A composition as claimed in any one of claims 1 to 3, wherein the gelling agents further comprise starch or another carrageenan type.

5. A composition as claimed in any one of claims 1 to 4, further comprising fat in the amount of 1 to 10 % (by weight of the total composition).

6. A composition as claimed in any one of claims 1 to 5, further comprising maltodextrin or glucose syrup in the amount of up to 40 % (by weight of the total composition).

7. A composition as claimed in any one of claims 1 to 6, wherein the amount of water is in the range 40 to 60 %, preferably 45 to 60 %.

8. A composition as claimed in any one of claims 1 to 7, wherein the amount of flavourings is in the range 1 to 30 %, preferably 5 to 15 %.

9. A composition as claimed in any one of claims 1 to 8, wherein the food product is a sauce, soup, stock, bouillon, soup base or gravy.

10. A process for preparing a composition according to one of the claims 1 to 9 comprising the steps:
a. mixing gelling agents including at least iota-carrageenan and xanthan, in water,
b. heating to a temperature of at least 70 °C, preferably at least 80 °C,
c. adding salt and flavourings, and mixing,
d. heating at a temperature of at least 75 °C, preferably at least 80 °C, to pasteurize,
e. filling into containers, and
f. cooling to room temperature to form the gel.

11. A process as claimed in claim 10, further comprising making a premix of the gelling agents with maltodextrin and/or glucose syrup and/or starch.

12. A process as claimed in claim 10 or claim 11, further comprising adding fat after mixing of the gelling agents.

13. The use of a composition as claimed in any one of claims 1 to 9 for preparing a food product.

## Patentansprüche

1. Zusammensetzung in Form eines Gels zur Herstellung eines Nahrungsmittelproduktes, wobei die Zusammensetzung folgendes aufweist:
a) Wasser in der Menge von 30 bis 70 (Gew.-% der Gesamtzusammensetzung),
b) Aromatisierungen in der Menge von 1 bis 40 (Gew.-% der Gesamtzusammensetzung),
c) Salz in der Menge von 10 bis 25 (Gew.-% der Gesamtzusammensetzung), und
d) Geliermittel in der Menge von 0,2 bis 5 (Gew.-% der Gesamtzusammensetzung),
wobei die Geliermittel mindestens Iota-Carrageen und Xanthan aufweisen.

2. Zusammensetzung nach Anspruch 1, wobei die Menge der Geliermittel 0,6 bis 2 (Gew.-% der Gesamtzusammensetzung) beträgt.

3. Zusammensetzung nach Anspruch 1 oder 2, wobei das Verhältnis von Iota-Carrageen und Xanthan in dem Bereich von 80:20 bis 30:70, vorzugsweise in dem Bereich 50:50 bis 60:40, liegt.

4. Zusammensetzung nach einem der Ansprüche 1 bis 3, wobei die Geliermittel weiterhin Stärke oder eine andere Carrageenart aufweisen.

5. Zusammensetzung nach einem der Ansprüche 1 bis 4, weiterhin aufweisend Fett in der Menge von 1 bis 10 (Gew.-% der Gesamtzusammensetzung).

6. Zusammensetzung nach einem der Ansprüche 1 bis 5, weiterhin aufweisend Maltodextrin oder Glukosesirup in der Menge von bis zu 40 (Gew.-% der Gesamtzusammensetzung).

7. Zusammensetzung nach einem der Ansprüche 1 bis 6, wobei die Wassermenge in dem Bereich von 40 bis 60%, vorzugsweise 45 bis 60%, liegt.

8. Zusammensetzung nach einem der Ansprüche 1 bis 7, wobei die Menge der Aromatisierungen in dem Bereich von 1 bis 30%, vorzugsweise 5 bis 15%, liegt.

9. Zusammensetzung nach einem der Ansprüche 1 bis 8, wobei das Nahrungsmittelprodukt eine Soße, Suppe, ein Sud, eine Bouillon, eine Suppengrundlage oder eine Bratensoße ist.

10. Verfahren zur Herstellung einer Zusammensetzung nach einem der Ansprüche 1 bis 9, das die folgenden Schritte aufweist:
a. Vermischen der Geliermittel, einschließlich mindestens Iota-Carrageen und Xanthan, in Wasser,
b. Erwärmen auf eine Temperatur von mindestens 70°C, vorzugsweise 80°C,
c. Zugabe von Salz und Aromatisierungen und Vermischen,
d. Erwärmen auf eine Temperatur von mindestens 75°C, vorzugsweise mindestens 80°C, zum Pasteurisieren,
e. Abfüllen in Behälter und
f. Abkühlen auf Raumtemperatur, um das Gel zu bilden.

11. Verfahren nach Anspruch 10, weiter aufweisend die Herstellung eines Vorgemischs der Geliermittel mit Maltodextrin und/oder Glukosesirup und/oder Stärke.

12. Verfahren nach Anspruch 10 oder 11, weiterhin aufweisend die Zugabe von Fett nach dem Vermischen der Geliermittel.

13. Verwendung einer Zusammensetzung nach einem der Ansprüche 1 bis 9 für die Herstellung eines Nahrungsmittelproduktes.

## Revendications

1. Composition sous la forme d'un gel pour la préparation d'un produit alimentaire, la composition comprenant :
a) de l'eau dans une quantité de 30 à 70 % (en poids de la composition totale),
b) des arômes dans une quantité de 1 à 40 % (en poids de la composition totale),
c) du sel dans une quantité de 10 à 25 % (en poids de la composition totale), et
d) des gents de gélification dans une quantité de 0,2 à 5 % (en poids de la composition totale),
dans laquelle les agents de gélification comprennent au moins de la iota-carraghénane et du xanthane.

2. Composition selon la revendication 1, dans laquelle la quantité d'agents de gélification est de 0,6 à 2 % (en poids de la composition totale).

3. Composition selon la revendication 1 ou la revendication 2, dans laquelle le rapport de iota-carraghénane et xanthane est dans la plage de 80:20 à 30:70, de préférence dans la plage de 50:50 à 60:40.

4. Composition selon l'une quelconque des revendications 1 à 3, dans laquelle les agents de gélification comprennent en outre de l'amidon et un autre type de carraghénane.

5. Composition selon l'une quelconque des revendications 1 à 4, comprenant en outre de la matière grasse dans une quantité de 1 à 10 % (en poids de la composition totale).

6. Composition selon l'une quelconque des revendications 1 à 5, comprenant en outre de la maltodextrine ou du sirop de glucose dans une quantité allant jusqu'à 40% (en poids de la composition totale).

7. Composition selon l'une quelconque des revendications 1 à 6, dans laquelle la quantité d'eau est dans la plage de 40 à 60 %, de préférence de 45 à 60 %.

8. Composition selon l'une quelconque des revendications 1 à 7, dans laquelle la quantité d'arômes est dans la plage de 1 à 30 % ; de préférence de 5 à 15 %.

9. Composition selon l'une quelconque des revendications 1 à 8, dans laquelle le produit alimentaire est une sauce, de la soupe, du bouillon, du bouillon, une base de soupe ou une sauce au jus de viande.

10. Procédé destiné à préparer une composition selon l'une quelconque des revendications 1 à 9 comprenant les étapes :
a. mélanger des agents gélifiants comprenant au moins de la iota-carraghénane et du xanthane, dans de l'eau,
b. chauffer à une température d'au moins 70°C, de préférence au moins 80°C,
c. ajouter du sel et des arômes, et mélanger,
d. chauffer à une température d'au moins 75°C, de préférence d'au moins 80°C, afin de pasteuriser,
e. remplir dans des récipients, et
f. refroidir à température ambiante pour former le gel.

11. Procédé selon la revendication 10, comprenant en outre la réalisation d'un pré-mélange des agents de gélification avec de la maltodextrine et/ou du sirop de glucose et/ou de l'amidon.

12. Procédé selon la revendication 10 ou la revendication 11, comprenant en outre l'ajout de matière grasse après le mélange des agents de gélification.

13. Utilisation d'une composition selon l'une quelconque des revendications 1 à 9 pour la préparation d'un produit alimentaire.
